(19) **Europäisches Patentamt**

**European Patent Office**

**Office européen des brevets**

(11) **EP 1 169 789 B1**

(12) **EUROPEAN PATENT SPECIFICATION**

(45) Date of publication and mention
of the grant of the patent:
**26.10.2005 Bulletin 2005/43**

(21) Application number: **01902321.7**

(22) Date of filing: **15.01.2001**

(51) Int Cl.⁷: **H04B 7/005**

(86) International application number:
**PCT/EP2001/000412**

(87) International publication number:
**WO 2001/052443 (19.07.2001 Gazette 2001/29)**

(54) **POWER CONTROL IN DIRECT-MODE MOBILE COMMUNICATIONS**

LEISTUNGSREGELUNG BEI DIRECT-MODE MOBILKOMMUNIKATION

COMMANDE DE PUISSANCE DANS LES COMMUNICATIONS MOBILES EN MODE DIRECT

(84) Designated Contracting States:
**AT BE CH CY DE DK ES FI FR GR IE IT LI LU MC NL PT SE TR**

(30) Priority: **14.01.2000 GB 0000926**

(43) Date of publication of application:
**09.01.2002 Bulletin 2002/02**

(73) Proprietor: **Motorola Limited
Basingstoke, Hampshire RG22 4PD (GB)**

(72) Inventors:
• **JOHNSON, Christopher Philip
Basingstoke, Hampshire RG22 4EW (GB)**
• **KADIR, Timor
Oxford, Oxfordshire OX2 6UD (GB)**
• **VALENTINE, Stephen
Basingstoke, Hampshire RG22 4XX (GB)**

(74) Representative: **McCormack, Derek James et al
Optimus,
Grove House,
Lutyens Close,
Chineham Court
Basingstoke, Hampshire RG24 8AG (GB)**

(56) References cited:
WO-A-96/31014          US-A- 3 732 496
US-A- 4 777 653        US-A- 5 003 619

**Description**

<u>Field of the Invention</u>

The present invention relates to power control in mobile communications.

<u>Background of the Invention</u>

Mobile communication systems use mobile or portable transmitting and receiving equipment such as mobile telephones. Usually this equipment has as its power source a rechargeable battery. In such an arrangement it is important that the equipment uses the energy supplied by the battery in an efficient way in order that the battery is not used excessively.

Power control is known in this field and is used to increase battery life and decrease the frequency at which the battery needs to be recharged. However, power control is only used in certain circumstances in such communication systems. For example it is not normally used for what are known as direct mode calls, that is to say calls directly between, for example, mobile telephones which are not routed through a base station.

A known technique for power control is usually controlled from a base station, which measures the strength of the signal received from a mobile station. If the base station decides that the received signal has adequate strength then it instructs the mobile telephone to reduce its transmit power. This algorithm is not readily applicable to direct mode communication, for the following reasons. In the direct mode there are likely to be multiple users who are active in a state in which they receive transmitted signals. The transmitter device does not have any information regarding the strength of the signal which is received by the receivers and so does not know whether it can reduce its transmit power. Thus in direct mode operation it is conventional for the transmitting device to operate at full power. This can be wasteful.

Power control would be particularly useful in the direct mode of operation because calls are often made over small geographic areas and hence those calls invariably are transmitted at full power with inefficient use of the battery.

US-A-3,732,496 describes a method of adjusting the power level of a signal transmitted by a mobile radio directly to another radio with reference to the frequency of a signal received at the transmitting radio from the other radio.

<u>Summary of the Invention</u>

The present invention is concerned with a technique for power control, which functions with direct mode calls between mobile or portable radios.

According to a first aspect of the present invention there is provided a method in accordance with claim 1.

According to a second aspect of the present invention there is provided a communication system in accordance with claim 13.

According to a third aspect of the present invention there is provided a mobile or portable radio in accordance with claim 25.

By the invention, a transmitting mobile or portable radio is operable to transmit a signal in a direct mode of operation to a receiving mobile or portable radio and to receive an indication signal from the receiving radio about reception of the transmitted signal at the receiving radio, and to control the power level of the signal transmitted with reference to the received indication signal, the transmitting radio being operable to reduce its transmission power level incrementally until the receiving radio indicates that the received signal is at or below a given threshold.

The transmitting radio may transmit a signal to a plurality of receiving mobile or portable radios and may be operable to reduce its power level incrementally until any one of the receiving radios sends an indication signal indicating that the received signal is at or below a given threshold. The indication signal may be an alert signal to alert the transmitting radio not to reduce its power level further.

The transmitting radio may transmit initially at a first power level which is a maximum or full power level. The transmitting radio may transmit at the first level for a first period of time. The power may be reduced incrementally during subsequent periods of time. The periods of time may be substantially the same. The power reduction increments may be substantially the same. In another arrangement the time periods may vary. The time periods may increase in length as the power is reduced. The power reduction increments may change in accordance with the current power level.

A radio which is transmitting may be arranged, even after its power has been reduced, to transmit a relatively small proportion of the signal at a level higher than said reduced level. A predetermined time slot of one or more frames may be transmitted at said higher level.

The invention provides both increased battery life and improved frequency re-use. The potential for increasing battery life allows the use of a smaller or lighter battery.

Brief Description of the Drawings

The invention will be described now by way of example only, with particular reference to the accompanying drawings. In the drawings:

Figure 1 is a schematic illustration showing a group of mobile and/or portable radio transmitters and receivers, which can operate in accordance with the present invention, and

Figure 2 is a flow chart illustrating a power control algorithm in accordance with an embodiment of the invention.

Description of Embodiments of the Invention

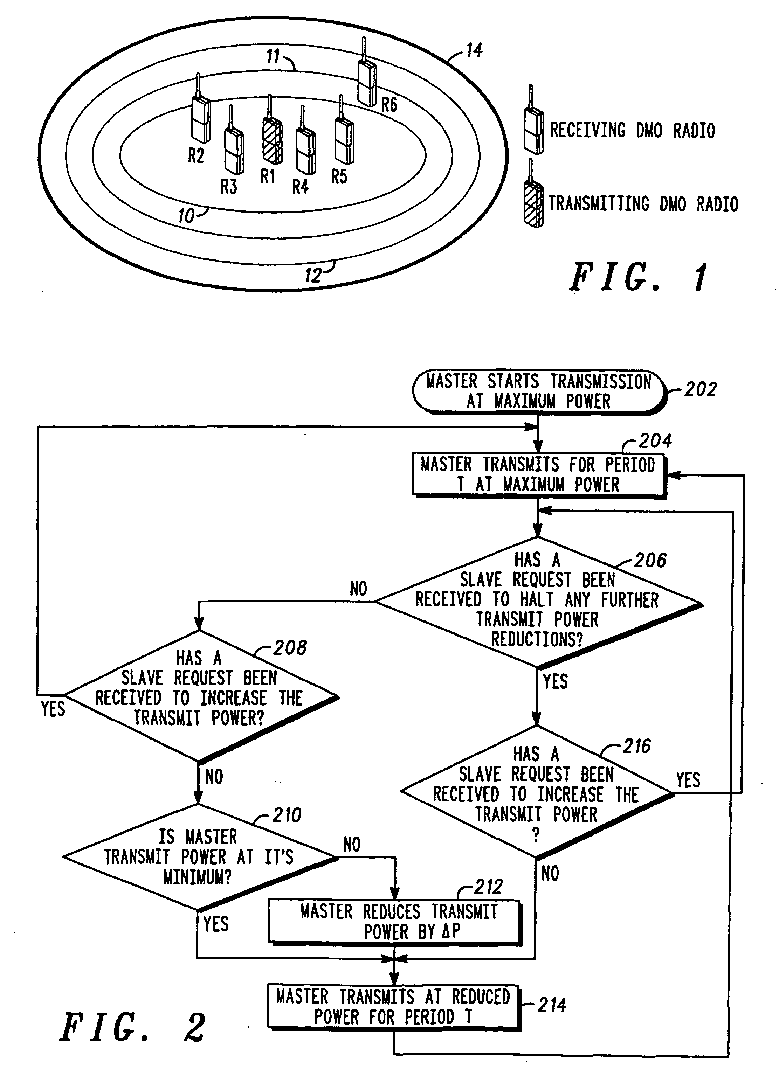

Referring to Figure 1 there is illustrated schematically a group of radios R1 to R6, which can each receive and transmit. Radios R1 to R6 may be mobile- or portable radios, or a mixture of both. Each of radios R1 to R6 may, for example, be a personal mobile radio (PMR) or a digital mobile telephone. In the scenario illustrated in Figure 1, radio R1 is currently the master and is transmitting to the other radios R2 to R6. Each radio includes a processing facility which can operate the algorithm which will be described now.

At the initiation of a call, radio R1 is arranged so that it transmits at maximum power. When the radio R1 transmits at maximum power, any receiving radios within the boundary 14 can receive the transmitted signal. The radio R1 transmits for a period of time T. If radio R1 does not receive any response signal from radios R2 to R6 it reduces its transmitting power by an increment $\Delta P$ at the end of that period T, so that the area over which the transmitted signal can then be received is limited to that within the boundary 12. Radio R1 then transmits for a further period T at this reduced power level. During these times, radios R2 to R6 are arranged such that if any of them sense that their received signal strength has fallen below a predetermined threshold, they can signal to R1 that this has occurred. It should be noted that a random delay can be introduced in order to avoid contention between signals transmitted from the receivers R2 to R6. The threshold is set to allow a margin of variation in the received signal strength, thereby ensuring that they remain in coverage.

In the scenario illustrated in Figure 1, when the power of radio R1 has been reduced by the first increment $\Delta P$ all the receiving radios R2 to R6 are still within coverage and at the end of the second period T radio R1 reduces its transmit power by another increment $\Delta P$. This reduces the area over which the signal can be received satisfactorily to that within the boundary 11. Radio R1 is arranged to continue to transmit at this reduced power for a further period of T. During this time in the scenario illustrated in Figure 1, radio R6 detects that its received signal strength has fallen below the threshold referred to and this means that any further decrease in power of the radio R1 will result in R6 not being able to receive the signal. Thus, in this situation R6 responds by transmitting an alert message in time slot 3 of a frame instructing the radio R1 not to reduce its power of transmission any further. R1 receives this signal and maintains its power at the current level. The direct mode call can then continue over the area within the boundary 11 at the current power level. This means that the battery is operating efficiently since it is providing only the power necessary to cover the area within which the receivers R2 to R6 are located.

At the end of a transmission by radio R1, one of the other radios R2 to R6 may become the new master and in that situation, that new master commences its transmission initially at full power and the sequence of steps set out above is repeated.

The period T and the power increment $\Delta P$ can be arranged so that they remain the same, or they can change as the transmitting power is reduced so that the transmit power is reduced relatively quickly at the start of a transmission, but as the power level is reduced the increments of power reduction also reduce. This can have benefit in scenarios where the direct mode users are grouped over a relatively small area. In such a case none of the users are likely to respond to the master whilst it is transmitting at nearest maximum power. When slave radios begin to signal i.e. inform the transmitting radio that power should not be reduced further, the power reduction should have slowed down providing the slaves with longer time intervals for detection and signalling.

An advantage of the invention is that radio R1 may transmit over a more limited geographical area than when transmitting at full power. This may reduce interference in neighbouring cells that are using the same transmission frequency as radio R1, thereby potentially improving frequency re-use between cells.

The arrangement described with reference to Figure 1 has referred to a situation in which all direct mode radio transmitters wishing to participate in the call are present when the call is set up. This means there are no radios on the edge of the area of coverage at the maximum level. If such a radio were present it might miss the call because it would attempt to join after the transmit power has been reduced. In order to deal with the problem of a radio attempting to join in the call when they are beyond the range of the reduced power coverage, the master transmitter can be arranged to transmit a number of slots at maximum power during each multiframe. For example, time slot 1 of frame 18 and time slot 3 of frames 6, 12, and 18 could be used since this is when synchronisation bursts are transmitted.

This would allow radios moving into the region of a call to synchronise and, if necessary, signal that they require the power level of the transmitting radio to be increased to enable them to correctly receive the call.

A further situation in which signalling may be required to increase the power level of the transmitting radio is when a receiving radio already in the call moves to an area of lower signal strength. In this case the receiving radio, which is already synchronised, can signal on slot 3 that it requires the transmitter to increase its power of transmission.

It will be appreciated that currently available mobile radios and telephones have sufficient processing capacity to operate the algorithm described above. It is also believed that given the above description it is well within the competence of a reasonably skilled programmer to develop the software necessary to implement the algorithm. In this respect Figure 2 is a flow diagram illustrating the functional steps which such software may carry out. The flowchart of figure 2, in conjunction with the above description, will enable an example of such software to be written.

In particular, box 202 of figure 2 shows the start of transmission by a radio at full power. The radio is referred to as the 'Master' radio on figure 2. At box 204, the radio is shown transmitting for a period T at maximum power. At box 206, the radio decides whether or not it has received a request from any listening radio to halt further reductions in power transmission. The listening radio is referred to as the 'Slave' radio on figure 2. If no such request has been received, in box 208 the radio considers whether or not a listening radio has requested an increase in transmission power. If a request to increase transmission power has been received, the radio returns to box 204. If no such request has been received, the radio decides in box 210 whether or not the radio is transmitting at minimum power. If it is not transmitting at minimum power, then in box 212 the radio reduces its transmission power and transmits at that power, see box 214. If at box 210 the radio is transmitting at its minimum power, then the radio continues to transmit at that power, see box 214. From box 214, the radio passes back to box 206.

If at box 206 the radio has received a request from any listening radio to halt further reductions in power transmission, the radio passes to box 216. In box 216, the radio decides whether or not a listening radio has requested an increase in transmission power. If a request to increase transmission power has been received, the radio returns to box 204. If no such request has been received, the radio passes to box 214, and continues to transmit at a reduced power level for a period T.

Although figure 2 shows transmission times as 'T' at both maximum and reduced transmission powers, these times do not have to be the same. Similarly, figure 2 illustrates a system where listening radios may request an increase in transmit power, see boxes 208 and 216. The radios may not be able to do this, and may simply be able to transmit a request to halt further power reductions.

Finally, figure 2 illustrates a power reduction increment of 'delta' P in box 212. The increment may not be the same in magnitude throughout the operating power range of the transmitting radio.

Example of power saving

To illustrate the extent of energy saving which can be provided by operating the present algorithm, the following example is given.

This example assumes that the master transmits at a maximum of 30 dBm and a minimum of 15 dBm with incremented steps of 2.5 dB i.e. 6 steps. The waiting period at each step before reducing the transmit power further is 2 multiframes i.e. approximately 2 secs. It assumes that all direct mode slaves are adequately close to enable them to receive when the master transmits at 15dBm. Time slot 1 of frame 18 and time slot 3 of frames 6, 12 and 18 are used for full power transmission in case a new, relatively distant slave wishes to enter the call. A power amplifier efficiency of 30% has been assumed.

For a 30 second transmission without power control then the energy used for transmitting is given by:

$$\text{Energy used} = \left[\frac{30}{4} + \frac{3x30}{18x4}\right] + \frac{1Watt}{.03} = 29.17\,Joules$$

For a 30 second transmission using the power control described then the energy used is given by:

$$\text{Energy used} = \left[\frac{2}{4} + \frac{3x30}{18x4} + \frac{1x28}{18x4}\right]x\frac{1Watt}{.03} + \left[\frac{1.89}{4}\right]x\frac{0.562Watt}{0.3} +$$
$$\left[\frac{1.89}{4}\right]x\frac{0.316Watt}{0.3} + \left[\frac{1.89}{4}\right]x\frac{0.178Watt}{0.3} + \left[\frac{1.89}{4}\right]x\frac{0.100Watt}{0.3} +$$
$$\left[\frac{1.89}{4}\right]x\frac{0.056Watt}{0.3} + \left[\frac{1.89}{4}\right]x9x\frac{0.32Watt}{0.3} = 9.49\,Joules$$

Transmit current is typically much greater than standby and receive current, meaning that to a large extent the transmit current determines battery life. The figures above indicate that battery life would be increased by a factor of approximately three in this case.

## Claims

1. A method of controlling the power of a signal transmitted by a transmitting mobile or portable radio (R1) which includes transmitting (202) a signal in a direct mode of operation from the transmitting mobile or portable radio to a receiving mobile or portable radio (R6) and receiving (206) an indication signal from the receiving radio about reception of the transmitted signal at the receiving radio, and controlling the power level of the signal transmitted by the transmitting radio with reference to the received indication signal, wherein the transmitting radio reduces (212) its transmission power level incrementally until the receiving radio indicates that the received signal is at or below a given threshold and the radio which is transmitting (R1) is arranged, even after its power level has been reduced to a reduced level, to transmit a proportion of its signal at a level higher than said reduced level.

2. A method according to claim 1 wherein the transmitting radio transmits a signal to a plurality (R2..R6) of receiving mobile or portable radios and the transmitting radio reduces its power level incrementally until any one of the receiving radios sends an indication signal indicating that the received signal is at or below a given threshold.

3. A method according to claim 1 or claim 2 wherein the indication signal is an alert signal to alert the transmitting radio not to reduce its power level further.

4. A method according to claim 1, claim 2 or claim 3 wherein the transmitting radio transmits initially at a first power level which is a maximum or full power level.

5. A method according to claim 4, wherein the transmitting radio transmits at the first power level for a first period of time.

6. A method according to claim 5, wherein the power is reduced incrementally during subsequent periods of time.

7. A method according to claim 6, wherein the periods of time are substantially the same.

8. A method according to claim 6, wherein the periods of time vary.

9. A method according to claim 9, wherein the periods of time increase in length as the power is reduced.

10. A method according to any of claims 6 to 9, wherein the power reduction increments are substantially the same.

11. A method according to any one of claims 6 to 9, wherein the power reduction increments change in accordance with the current power level.

12. A method according to claim 1, wherein a signal in one or more predetermined time slots of one or more predetermined frames of a communication timing sequence is transmitted at said higher level.

13. A communication system comprising a plurality of mobile or portable radios, each comprising a radio transmitter and a radio receiver, which can communicate with each other directly, a first one of the radios (R1) being operable as a transmitting radio and to control its transmission power level in a manner such that when the radio transmits a signal in a direct mode of operation to a receiving mobile or portable radio (R6) and receives an indication signal from the receiving radio about reception of the transmitted signal at the receiving radio, the power level control (206) by the transmitting radio is carried out with reference to the received indication signal, wherein the transmitting radio is operable to reduce its power level incrementally until the receiving radio indicates that the received signal is at or below a given threshold and the radio which is transmitting (R1) is operable, even after its power level has been reduced, to transmit a proportion of its signal at a level higher than said reduced level.

**14.** A communication system according to claim 13 wherein a first one of the radios is operable to transmit a signal to a plurality of other mobile or portable radios (R2..R6) and the transmitting radio is operable to reduce its power level incrementally until any one of the receiving radios sends an indication signal indicating that the received signal is at or below a given threshold.

**15.** A communication system according to claim 13 or claim 14 wherein the indication signal is an alert signal to alert the transmitting radio not to reduce its power level further.

**16.** A communication system according to claim 15, wherein the radio operable as the transmitting radio is operable to transmit initially at a first power level which is the maximum or full power level of transmission by the radio.

**17.** A communication system according to claim 15 or claim 16, wherein the transmitting radio is arranged to transmit at the first power level for a first period of time.

**18.** A communication system according to claim 17, wherein the power level of the transmitting radio is reduced incrementally during subsequent periods of time.

**19.** A communication system according to claim 18, wherein the periods of time are substantially the same.

**20.** A communication system according to claim 18, wherein the periods of time vary.

**21.** A communication system according to claim 20, wherein the periods of time increase in length as the power is reduced.

**22.** A communication system according to any of claims 18 to 21, wherein the power reduction increments are substantially the same.

**23.** A communication system according to any of claims 18 to 21, wherein the power reduction increments change in accordance with the current power level.

**24.** A system according to claim 13, wherein the transmitted signal transmitted by the transmitting radio is at the higher level in a predetermined time slot of one or more predetermined frames of a communication timing sequence.

**25.** A mobile or portable radio (R1) operable to transmit a signal in a direct mode of operation to a receiving mobile or portable radio (R6) and to receive an indication signal from the receiving radio about reception of the transmitted signal at the receiving radio, and to control the power level of the signal transmitted with reference to the received indication signal, wherein the radio is operable to reduce its transmission power level incrementally until the receiving radio indicates that the received signal is at or below a given threshold and the radio (R1) is operable, even after its power level has been reduced, to transmit a proportion of its signal at a level higher than said reduced level.

**Patentansprüche**

**1.** Verfahren zum Steuern der Leistung eines Signals, das von einer übertragenden mobilen oder tragbaren Funkeinrichtung (R1) übertragen wird, was ein Übertragen (202) eines Signals in einem Direkt-Betriebszustand von der übertragenden mobilen oder tragbaren Funkeinrichtung an eine empfangende mobile oder tragbare Funkeinrichtung (R6) und ein Empfangen (206) eines Anzeigesignals, von der empfangenden Funkeinrichtung, über einen Empfang des übertragenen Signals an der empfangenden Funkeinrichtung, und ein Steuern des Leistungspegels des von der übertragenden Funkeinrichtung übertragenen Signals in Abhängigkeit von dem empfangenen Anzeigesignal umfasst, wobei die übertragende Funkeinrichtung ihren Übertragungsleistungspegel stufenweise reduziert (212), bis die empfangende Funkeinrichtung anzeigt, dass das empfangene Signal bei oder unterhalb eines gegebenen Grenzwertes liegt, und wobei die Funkeinrichtung, die überträgt (R1), dazu eingerichtet ist, auch nachdem ihr Leistungspegel auf einen reduzierten Pegel reduziert wurde, einen Anteil ihres Signals bei einem Pegel zu übertragen, der höher ist als der reduzierte Pegel.

2. Verfahren nach Anspruch 1, wobei die übertragende Funkeinrichtung ein Signal an eine Mehrzahl (R2..R6) von empfangenden mobilen oder tragbaren Funkeinrichtungen überträgt und die übertragende Funkeinrichtung ihren Leistungspegel stufenweise reduziert, bis irgendeine der empfangenden Funkeinrichtungen ein Anzeigesignal sendet, das anzeigt, dass das empfangene Signal bei oder unterhalb eines gegebenen Grenzwertes liegt.

3. Verfahren nach Anspruch 1 oder 2, wobei das Anzeigesignal ein Alarmsignal ist, um die übertragende Funkeinrichtung zu alarmieren, ihren Leistungspegel nicht weiter zu reduzieren.

4. Verfahren nach einem der Ansprüche 1 bis 3, wobei die übertragende Funkeinrichtung anfänglich bei einem ersten Leistungspegel überträgt, der ein maximaler oder ein Vollleistungspegel ist.

5. Verfahren nach Anspruch 4, wobei die übertragende Funkeinrichtung für einen ersten Zeitraum bei dem ersten Leistungspegel überträgt.

6. Verfahren nach Anspruch 5, wobei die Leistung während nachfolgender Zeiträume stufenweise reduziert wird.

7. Verfahren nach Anspruch 6, wobei die Zeiträume im Wesentlichen gleich sind.

8. Verfahren nach Anspruch 6, wobei die Zeiträume variieren.

9. Verfahren nach Anspruch 8, wobei die Zeiträume in der Länge zunehmen, wenn die Leistung reduziert wird.

10. Verfahren nach:einem der Ansprüche 6 bis 9, wobei die Leistungsreduzierungsstufen im Wesentlichen gleich sind.

11. Verfahren nach einem der Ansprüche 6 bis 9, wobei die Leistungsreduzierungsstufen sich gemäß dem momentanen Leistungspegel verändern.

12. Verfahren nach Anspruch 1, wobei ein Signal in einem oder in mehreren vorbestimmten Zeitschlitzen eines oder mehrerer vorbestimmter Frames einer Kommunikationszeitgebungssequenz bei dem höheren Pegel übertragen wird.

13. Kommunikationssystem, das eine Mehrzahl von mobilen oder tragbaren Funkeinrichtungen umfasst, wobei jede einen Funksender und einen Funkempfänger umfasst, die jeweils miteinander kommunizieren können, wobei eine erste der Funkeinrichtungen (R1) betriebsfähig als eine übertragende Funkeinrichtung und dazu ausgelegt ist, ihren Übertragungsleistungspegel auf eine Weise zu steuern, dass, wenn die Funkeinrichtung ein Signal in einem Direkt-Betriebszustand an eine empfangende mobile oder tragbare Funkeinrichtung (R6) überträgt und ein Anzeigesignal, von der empfangenden Funkeinrichtung, über einen Empfang des übertragenen Signals an der empfangenden Funkeinrichtung empfängt, die Leistungspegelsteuerung (206) durch die übertragende Funkeinrichtung in Abhängigkeit von dem empfangenen Anzeigesignal durchgeführt wird, wobei die übertragende Funkeinrichtung betriebsfähig dazu ausgelegt ist, ihren Leistungspegel stufenweise zu reduzieren, bis die empfangende Funkeinrichtung anzeigt, dass das empfangene Signal bei oder unterhalb eines gegebenen Grenzwertes liegt und die Funkeinrichtung, die überträgt (R1), dazu betriebsfähig ausgelegt ist, auch nachdem ihr Leistungspegel reduziert wurde, einen Anteil ihres Signals bei einem höheren Pegel als dem reduzierten Pegel zu übertragen.

14. Kommunikationssystem nach Anspruch 13, wobei eine erste der Funkeinrichtungen dazu betriebsfähig ausgelegt ist, ein Signal an eine Mehrzahl von weiteren mobilen oder tragbaren Funkeinrichtungen (R2..R6) zu übertragen und die übertragende Funkeinrichtung dazu betriebsfähig ausgelegt ist, ihren Leistungspegel stufenweise zu reduzieren, bis irgendeine der empfangenden Funkeinrichtungen ein Anzeigesignal sendet, das anzeigt, dass das empfangene Signal bei oder unterhalb eines gegebenen Grenzwerts liegt.

15. Kommunikationssystem nach Anspruch 13 oder 14, wobei das Anzeigesignal ein Alarmsignal ist, um die übertragende Funkeinrichtung zu alarmieren, ihren Leistungspegel nicht weiter zu reduzieren.

**16.** Kommunikationssystem nach Anspruch 15, wobei die als übertragende Funkeinrichtung betriebsfähige Funkeinrichtung betriebsfähig dazu ausgelegt ist, anfänglich bei einem ersten Leistungspegel zu übertragen, welcher der maximale oder der Vollleistungsübertragungspegel durch die Funkeinrichtung ist.

**17.** Kommunikationssystem nach Anspruch 15 oder 16, wobei die übertragende Funkeinrichtung dazu eingerichtet ist, für einen ersten Zeitraum an dem ersten Leistungspegel zu übertragen.

**18.** Kommunikationssystem nach Anspruch 17, wobei der Leistungspegel der übertragenden Funkeinrichtung während nachfolgender Zeiträume stufenweise reduziert wird.

**19.** Kommunikationssystem nach Anspruch 18, wobei die Zeiträume im Wesentlichen gleich sind.

**20.** Kommunikationssystem nach Anspruch 18, wobei die Zeiträume variieren.

**21.** Kommunikationssystem nach Anspruch 20, wobei die Zeiträume in der Länge zunehmen, wenn die Leistung reduziert wird.

**22.** Kommunikationssystem nach einem der Ansprüche 18 bis 21, wobei die Leistungsreduzierungsstufen im Wesentlichen gleich sind.

**23.** Kommunikationssystem nach einem der Ansprüche 18 bis 21, wobei die Leistungsreduzierungsstufen sich gemäß dem momentanen Leistungspegel verändern.

**24.** System nach Anspruch 13, wobei das übertragene Signal, das von der übertragenden Funkeinrichtung übertragen wurde, bei einem höheren Pegel in einem vorbestimmten Zeitschlitz eines oder mehrerer vorbestimmter Frames einer Kommunikationszeitgebungssequenz ist.

**25.** Mobile oder tragbare Funkeinrichtung (R1), die betriebsfähig dazu ausgelegt ist, ein Signal in einem Direkt-Betriebsmodus an eine empfangende mobile oder tragbare Funkeinrichtung (R6) zu übertragen und ein Anzeigesignal, von der empfangenden Funkeinrichtung, über einen Empfang des übertragenen Signals an der empfangenden Funkeinrichtung zu empfangen, und um den Leistungspegel des übertragenen Signals in Abhängigkeit von dem empfangenen Anzeigesignal zu steuern, wobei die Funkeinrichtung betriebsfähig dazu ausgelegt ist, ihren Übertragungsleistungspegel stufenweise zu reduzieren, bis die empfangende Funkeinrichtung anzeigt, dass das empfangene Signal bei oder unterhalb eines gegebenen Grenzwertes liegt und die Funkeinrichtung (R1) betriebsfähig dazu ausgelegt ist, auch nachdem ihr Leistungspegel reduziert wurde, einen Anteil ihres Signals bei einem Pegel zu übertragen, der höher ist als der reduzierte Pegel.

**Revendications**

**1.** Procédé de commande de la puissance d'un signal émis par une radio mobile ou portable émettrice (R1) qui inclut l'émission (202) d'un signal dans un mode d'exploitation direct depuis la radio mobile ou portable émettrice vers une radio mobile ou portable réceptrice (R6) et la réception (206) d'un signal d'indication de la radio réceptrice concernant la réception du signal émis au niveau de la radio réceptrice, et la commande du niveau de puissance du signal émis par la radio émettrice quant au signal d'indication reçu, dans lequel la radio émettrice réduit (212) son niveau de puissance d'émission incrémentalement jusqu'à ce que la radio réceptrice indique que le signal reçu est au niveau ou en dessous d'un seuil donné et la radio qui est en train d'émettre (R1) est disposée, même après que son niveau de puissance a été réduit à un niveau réduit, pour émettre une proportion de son signal à un niveau supérieur audit niveau réduit.

**2.** Procédé selon la revendication 1, dans lequel la radio émettrice émet un signal vers une pluralité (R2...R6) de radios mobiles ou portables réceptrices et la radio émettrice réduit son niveau de puissance incrémentalement jusqu'à ce que l'une quelconque des radios réceptrices envoie un signal d'indication indiquant que le signal reçu est au niveau ou en dessous d'un seuil donné.

**3.** Procédé selon la revendication 1 ou la revendication 2, dans lequel le signal d'indication est un signal d'alerte pour alerter la radio émettrice de ne pas réduire davantage son niveau de puissance.

**4.** Procédé selon la revendication 1, la revendication 2 ou la revendication 3, dans lequel la radio émettrice émet initialement à un premier niveau de puissance qui est un niveau de puissance maximum ou de pleine puissance.

**5.** Procédé selon la revendication 4, dans lequel la radio émettrice émet au premier niveau de puissance pendant une première période de temps.

**6.** Procédé selon la revendication 5, dans lequel la puissance est réduite incrémentalement durant les périodes de temps subséquentes.

**7.** Procédé selon la revendication 6, dans lequel les périodes de temps sont sensiblement les mêmes.

**8.** Procédé selon la revendication 6, dans lequel les périodes de temps varient.

**9.** Procédé selon la revendication 6, dans lequel les périodes de temps augmentent en longueur au fur et à mesure que la puissance est réduite.

**10.** Procédé selon l'une quelconque des revendications 6 à 9, dans lequel les incréments de la réduction de puissance sont sensiblement les mêmes.

**11.** Procédé selon l'une quelconque des revendications 6 à 9, dans lequel les incréments de la réduction de puissance changent conformément au niveau de puissance actuel.

**12.** Procédé selon la revendication 1, dans lequel un signal dans une ou plusieurs tranches de temps prédéterminées d'une ou plusieurs trames prédéterminées d'une séquence de cadencement de communication est émis audit niveau supérieur.

**13.** Système de communication comprenant une pluralité de radios mobiles ou portables, chacune comprenant un émetteur radio et un récepteur radio, qui peuvent communiquer l'un avec l'autre directement, une première des radios (R1) étant exploitable comme une radio émettrice et pour commander son niveau de puissance d'émission d'une manière telle que lorsque la radio émet un signal dans un mode d'exploitation direct vers une radio mobile ou portable réceptrice (R6) et reçoit un signal d'indication de la radio réceptrice concernant la réception du signal émis au niveau de la radio réceptrice, la commande du niveau de puissance (206) par la radio émettrice est effectuée quant au signal d'indication reçu, dans lequel la radio émettrice est exploitable pour réduire son niveau de puissance incrémentalement jusqu'à ce que la radio réceptrice indique que le signal reçu est au niveau ou en dessous d'un seuil donné et la radio qui est en train d'émettre (R1) est exploitable, même après que son niveau de puissance a été réduit, pour émettre une proportion de son signal à un niveau supérieur audit niveau réduit.

**14.** Système de communication selon la revendication 13, dans lequel une première des radios est exploitable pour émettre un signal vers une pluralité d'autres radios mobiles ou portables (R2...R6) et la radio émettrice est exploitable pour réduire son niveau de puissance incrémentalement jusqu'à ce que l'une quelconque des radios réceptrices envoie un signal d'indication indiquant que le signal reçu est au niveau ou en dessous d'un seuil donné.

**15.** Système de communication selon la revendication 13 ou la revendication 14, dans lequel le signal d'indication est un signal d'alerte pour alerter la radio émettrice de ne pas réduire davantage son niveau de puissance.

**16.** Système de communication selon la revendication 15, dans lequel la radio exploitable en tant que radio émettrice est exploitable pour émettre initialement à un premier niveau de puissance qui est un niveau de puissance maximum ou de pleine puissance d'émission par la radio.

**17.** Système de communication selon la revendication 15 ou la revendication 16, dans lequel la radio émettrice est disposée pour émettre au premier niveau de puissance pendant une première période de temps.

**18.** Système de communication selon la revendication 17, dans lequel le niveau de puissance de la radio émettrice est réduit incrémentalement durant les périodes de temps subséquentes.

**19.** Système de communication selon la revendication 18, dans lequel les périodes de temps sont sensiblement les mêmes.

**20.** Système de communication selon la revendication 18, dans lequel les périodes de temps varient.

**21.** Système de communication selon la revendication 20, dans lequel les périodes de temps augmentent en longueur au fur et à mesure que la puissance est réduite.

**22.** Système de communication selon l'une quelconque des revendications 18 à 21, dans lequel les incréments de la réduction de puissance sont sensiblement les mêmes.

**23.** Système de communication selon l'une quelconque des revendications 18 à 21, dans lequel les incréments de la réduction de puissance changent conformément au niveau de puissance actuel.

**24.** Système selon la revendication 13, dans lequel le signal émis émis par la radio émettrice est au niveau supérieur dans une tranche de temps prédéterminée d'une ou plusieurs trames prédéterminées d'une séquence de cadencement de communication.

**25.** Radio mobile ou portable (R1) exploitable pour émettre un signal dans un mode d'exploitation direct vers une radio mobile ou portable réceptrice (R6) et pour recevoir un signal d'indication de la radio réceptrice concernant la réception du signal émis au niveau de la radio réceptrice, et pour commander le niveau de puissance du signal émis quant au signal d'indication reçu, dans laquelle la radio est exploitable pour réduire son niveau de puissance d'émission incrémentalement jusqu'à ce que la radio réceptrice indique que le signal reçu est au niveau ou en dessous d'un seuil donné et la radio (R1) est exploitable, même après que son niveau de puissance a été réduit, pour émettre une proportion de son signal à un niveau supérieur audit niveau réduit.

RECEIVING DMO RADIO

TRANSMITTING DMO RADIO

*FIG. 1*

MASTER STARTS TRANSMISSION AT MAXIMUM POWER — 202

MASTER TRANSMITS FOR PERIOD T AT MAXIMUM POWER — 204

HAS A SLAVE REQUEST BEEN RECEIVED TO HALT ANY FURTHER TRANSMIT POWER REDUCTIONS? — 206

HAS A SLAVE REQUEST BEEN RECEIVED TO INCREASE THE TRANSMIT POWER? — 208

HAS A SLAVE REQUEST BEEN RECEIVED TO INCREASE THE TRANSMIT POWER ? — 216

IS MASTER TRANSMIT POWER AT IT'S MINIMUM? — 210

MASTER REDUCES TRANSMIT POWER BY $\Delta$P — 212

MASTER TRANSMITS AT REDUCED POWER FOR PERIOD T — 214

NO    YES    NO    YES    NO    YES

*FIG. 2*